Europäisches Patentamt

(19) European Patent Office

Office européen des brevets

(11) Numéro de publication: **0 201 436**
**B1**

(12) **FASCICULE DE BREVET EUROPEEN**

(45) Date de publication du fascicule du brevet:
03.01.90

(51) Int. Cl.⁴: **A01K 1/03**

(21) Numéro de dépôt: 86420104.1

(22) Date de dépôt: **21.04.86**

(54) **Cage à usage unique pour le logement de petits animaux en ambiance protégée.**

(30) Priorité: **22.04.85 FR 8506288**

(43) Date de publication de la demande:
**17.12.86 Bulletin 86/46**

(45) Mention de la délivrance du brevet:
**03.01.90 Bulletin 90/1**

(84) Etats contractants désignés:
**AT BE CH DE GB IT LI LU NL SE**

(56) Documents cités:
**EP-A- 0 036 628**
**FR-A- 2 029 182**
**US-A- 4 130 088**

(73) Titulaire: **Dauvergne, Bernard, 53, rue Hénon,
F-69004 Lyon(FR)**
Titulaire: **Freiche, Jean-Charles, Le
Saint-Hubert 21, Chemin Charrières Blanche,
F-69130 Ecully(FR)**
Titulaire: **Paucod, Jean-Charles, 1, rue Ernest-Fabrègue,
F-69009 Lyon(FR)**
Titulaire: **Saint Marc, Bruno, 39, Montée de la Garde,
F-69005 Lyon(FR)**

(72) Inventeur: **Dauvergne, Bernard, 53, rue Hénon,
F-69004 Lyon(FR)**
Inventeur: **Freiche, Jean-Charles, Le
Saint-Hubert 21, Chemin Charrières Blanche,
F-69130 Ecully(FR)**
Inventeur: **Paucod, Jean-Charles, 1, rue
Ernest-Fabrègue, F-69009 Lyon(FR)**
Inventeur: **Saint Marc, Bruno, 39, Montée de la Garde,
F-69005 Lyon(FR)**

(74) Mandataire: **Ropital-Bonvarlet, Claude et al, Cabinet
BEAU DE LOMENIE 99, Grande rue de la Guillotière,
F-69007 Lyon(FR)**

## Description

La présente invention a pour objet une cage à usage unique pour le logement de petits animaux en ambiance protégée, comprenant un bac en matière plastique rigide incinérable et un couvercle rapporté de façon amovible sur le bac.

On connait différentes cages plus particulièrement destinées à la stabulation d'animaux de laboratoires, tels que souris, rats, cobayes. Ces cages comprennent, généralement, un bac en matière rigide dans lequel sont placés les animaux, avec une grille profilée amovible en acier inoxydable qui prend appui sur le rebord du bac et sert, à la fois, de mangeoire et de support pour un abreuvoir en forme de biberon. Un couvercle en forme de dôme ou de tronc de pyramide et muni d'un filtre est rapporté sur le bac, une bague ou garniture d'étanchéité étant disposée autour du rebord supérieur du bac au niveau de la jonction avec le couvercle filtre.

On sait que les problèmes de contamination sont particulièrement critiques dans les animaleries devant contenir de grandes colonies d'animaux. En effet, une infection d'un ou plusieurs animaux constatée dans une cage peut s'étendre aux animaux placés dans des cages voisines, si toutes les précautions ne sont pas prises pour empêcher les contaminations. L'utilisation de couvercles filtrants permet de réduire les risques de transport par l'air de microorganismes et poussières d'une cage à une autre et donc limite, à la fois, les risques de contamination des animaux d'une cage à partir de l'atmosphère ambiante et les risques de transmission vers l'extérieur des germes pathogènes qui pourraient apparaître dans une cage donnée par suite de l'apparition d'une maladie chez les animaux de cette cage.

Les couvercles filtrants ne sont, cependant, pas toujours montées de façon étanche sur les bacs correspondants et doivent être ouverts, non seulement pour l'introduction et le retrait des animaux, mais également pour la mise en place de la nourriture et de la boisson. Ceci augmente les risques de contamination. Par ailleurs, les bacs des cages sont métalliques ou en polycarbonate, de manière à pouvoir être nettoyés en autoclave à une température de l'ordre de 120°C et être ensuite réutilisés. Cette réutilisation implique un risque, malgré le soin apporté au nettoyage et à la désinfection, car, dans le cas de cages très contaminées par des animaux, des germes pathogènes peuvent, éventuellement, résister au passage en autoclave. Les cages réutilisables présentent donc des inconvénients et impliquent, de toute manière, de disposer d'une laverie et d'un autoclave qui sont des installations coûteuses pour un petit laboratoire qui n'élève que quelques lots d'animaux.

On connaît, également, d'après le brevet EP-A 0 036 628, une cage en matériau plastique ridige comprenant un bac et un couvercle rapporté de façon étanche et amovible sur la cage, par l'intermédiaire d'une jupe de serrage. Le couvercle, qui peut éventuellement être jetable, comporte un moyen de filtrage dans sa partie centrale, ledit moyen étant rattaché au cadre du couvercle sur tout son pourtour.

Le bac est, de façon classique, destiné à être nettoyé en autoclave et son utilisation pose les problèmes de contamination, de manipulation et de coût déjà évoqués.

On connaît, également, d'après le brevet FR-A 2 029 182, une boîte pour l'élevage et l'entretien de petits animaux, réalisée dans une matière plastique moulée étuvable. Elle comporte, par ailleurs, de manière classique, des moyens d'apport de nourriture situés à l'extérieur de la boîte. Cette proposition souffre des inconvénients relatifs aux problèmes de contamination déjà évoqués précédemment.

On a également proposé de réaliser des cages simplifiées comprenant un bac en polystyrène cristal transparent à jeter après usage, surmonté d'une grille métallique. Le bac s'insère comme un tiroir dans un élément en fil d'acier galvanisé formant couvercle, mangeoire et porte biberon. L'utilisation d'un bac jetable permet de travailler dans de meilleures conditions sanitaires que lorsque l'on emploie un bac réutilisable. Toutefois, la présence de grilles métalliques réutilisables limite l'intérêt de l'utilisation de bacs jetables, puisque ces grilles doivent elles-mêmes être soumises à un nettoyage et apportent un risque de contamination. On notera, de plus, que de telles cages à bac jetable ne sont pas équipées de système de couvercle filtrant.

La présente invention vise à remédier aux inconvénients précités et à permettre d'effectuer, dans des conditions sanitaires optimales, l'élevage de petits animaux de laboratoire, de manière que, même en présence de germes infectieux très pathogènes, les risques d'une contamination d'une cage d'animaux à une autre soient réduits de façon drastique et ceci même dans un laboratoire ne disposant pas de machine à laver ou d'autoclave.

Ces buts sont atteints grâce à une cage pour le logement de petits animaux en ambiance protégée, comprenant un bac en matière plastique rigide et un couvercle s'encastrant de façon étanche de façon amovible sur un élément de la cage, ledit bac comprenant un compartiment central pour le logement des animaux et ledit couvercle comprenant un cadre en matière plastique et une partie centrale comportant un moyen de filtrage vis-à-vis de l'ambiance externe, ledit moyen étant rattaché au cadre sur tout son pourtour et s'étendant au moins sur une partie substantielle du compartiment central du bac, ladite cage étant caractérisée en ce que:

– la matière plastique, utilisée pour la réalisation du bac et du couvercle, est une matière plastique incinérable, de manière que le bac et le couvercle puissent être détruits par incinération après un usage unique,
– le couvercle s'encastre à force directement sur le rebord supérieur du bac,
– des compartiments latéraux sont situés de part et d'autre du compartiment central, ces compartiments étant destinés à la réception d'un réservoir de boisson et d'un réservoir de nourriture, respectivement.

De façon plus particulière, la partie centrale filtrante du couvercle comprend un filtre en papier pris en sandwich entre deux fines grilles support en matière plastique thermosoudées sur le cadre en matière plastique du couvercle.

Pour garantir l'étanchéité, selon un mode de réalisation possible, le rebord du couvercle définit une gorge élastique venant s'encastrer à force sur le rebord rigide du bac.

Le couvercle est essentiellement plat et situé dans le plan du rebord supérieur du bac.

Avantageusement, le réservoir de nourriture comprend une enveloppe en matière plastique épousant sensiblement la forme du compartiment de nourriture et présentant une grille en matière plastique formant mangeoire, intégrée par thermosoudage dans l'enveloppe dans la face du réservoir située en regard du compartiment central.

Selon une autre caractéristique avantageuse, le réservoir de boisson comprend une enveloppe en matière plastique épousant sensiblement la forme du compartiment de boisson et présentant une tétine disposée dans l'enveloppe dans la face située en regard du compartiment central.

Le fond du bac peut comporter des nervures transversales situées au niveau des séparations entre le compartiment central et les compartiments latéraux pour retenir une litière disposée dans le fond du compartiment central.

Le bac comprend des nervures formées en relief sur les parois du bac, entre le fond et le rebord supérieur du bac, au niveau des séparations entre le compartiment central et les compartiments latéraux pour retenir les réservoirs de boisson et de nourriture.

Selon une configuration intéressante, le bac présente la forme d'un tronc de pyramide inversé et les séparations entre le compartiment central et les compartiments latéraux sont inclinées vers le centre du bac, formant un angle obtus avec le fond des compartiments latéraux.

D'autres caractéristiques et avantages de l'invention ressortiront de la description suivante d'un mode particulier de réalisation, donné à titre d'exemple, en référence au dessin annexé sur lequel :

- la fig. 1 est une vue en perspective d'une cage à usage unique selon l'invention,
- les fig. 2 et 3 montrent, vus en perspective, des réservoirs de boisson et de nourriture destinés à être incorporés dans la cage de la fig. 1,
- les fig. 4A et 4B montrent un réservoir de boisson vu de face et de côté respectivement,
- les fig. 5A et 5B montrent un réservoir de nourriture vu de face et de côté respectivement,
- la fig. 6 est une vue en coupe selon la ligne VI-VI de la fig. 1,
- la fig. 7 est une vue en coupe du couvercle de cage prise selon la ligne VII-VII de la fig. 9,
- la fig. 8 est une vue en coupe du bac de la cage, prise selon la ligne VIII-VIII de la fig. 1, et,
- la fig. 9 est une vue de dessus du couvercle de la cage.

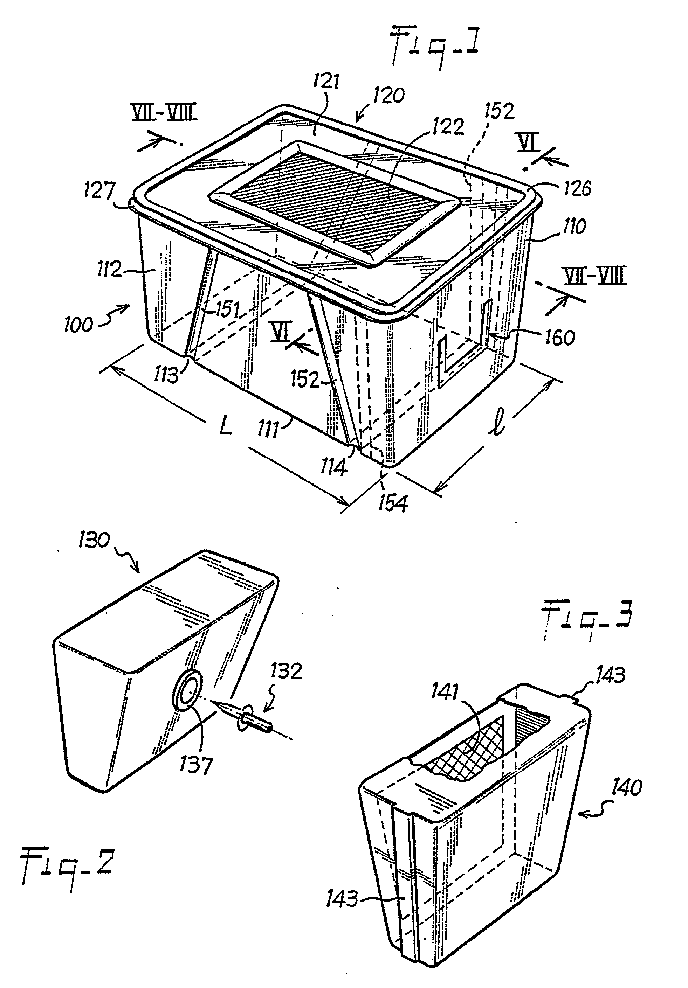

La fig. 1 montre une cage 100 selon l'invention, composée d'un bac 110 ayant la forme d'un tronc de pyramide et d'un couvercle 120 qui est essentiellement plat. Le bac 110 est réalisé en une matière plastique rigide incinérable, par exemple un polystyrène cristal, tandis que le couvercle 120 comprend lui-même un cadre 121 en matière plastique incinérable et une partie centrale 122 formant filtre.

La cage 100 constitue une unité complète pouvant servir au logement, à l'alimentation et à la protection d'un lot de petits animaux utilisés en laboratoire, tels que rats, souris, cobayes, hamsters, pendant une durée prédéterminée d'observation qui peut être de l'ordre d'une semaine. Après usage, la cage peut être détruite toute entière par incinération, de sorte qu'elle ne peut apporter de contamination, comme dans le cas de cages nettoyées, passées en autoclave et réutilisées.

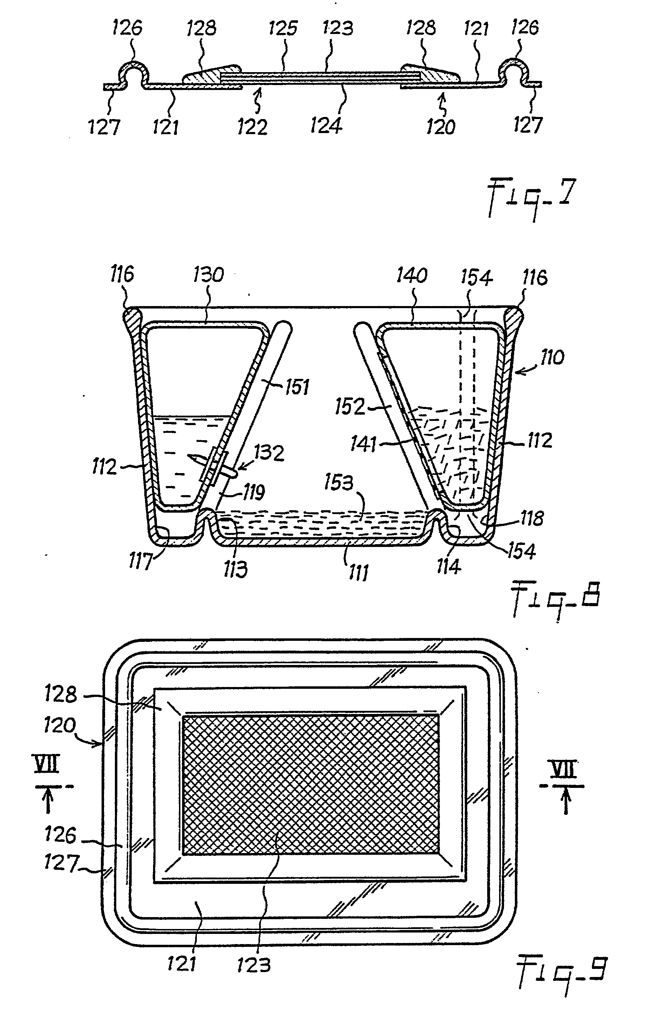

En cours d'usage, l'isolation des animaux, vis-à-vis de l'ambiance externe, est effectuée du fait que le couvercle 120 est muni d'un filtre 122 et est engagé de façon étanche sur le rebord supérieur 116 du bac 110 (fig. 7 et 8). Les animaux d'un lot sont donc protégés d'une contamination extérieure et, inversement, un lot d'animaux, soumis à une maladie et placé dans une cage 100, ne peut contaminer les animaux d'autre lots. Les manipulations de départ sont, par ailleurs, très réduites puisqu'une cage 100 est prééquipée et comprend, formés dans le bac 110, un compartiment central 119 de logement des animaux avec une litière 153, un premier compartiment latéral 117 dans lequel est placé un réservoir 130 de boisson et un second compartiment latéral 118 dans lequel est placé un réservor 140 de nourriture. Avantageusement, les compartiments latéraux 117, 118 sont situés de part et d'autre du compartiment central 119, symétriquement par rapport à un plan médian du compartiment central (fig. 8).

Le fond 111 du bac 110 présente des gorges rentrantes 113, 114 qui définissent des nervures à l'intérieur du bac, au niveau des séparations entre le compartiment central 119 et les compartiments latéraux 117, 118 et peuvent ainsi retenir la litière 153 dans le fond du compartiment central 119, tout en renforçant le fond 111 du bac 110.

Des nervures internes 151, 152 sont également formées dans les parois latérales 112 du bac 110, sur deux côtés opposés, au niveau des limites de séparation entre le compartiment central 119 et les compartiments latéraux 117, 118, pour servir de retenue aux réservoirs 130, 140 de boisson et de nourriture, respectivement.

Il est possible de prévoir des moyens de retenue des réservoirs 130, 140 autres que les nervures 151, 152. Ainsi, on a représenté sur les fig. 1, 3, 5A, 5B, 6 et 8 un système de glissières verticales 154, 143 permettant de retenir le réservoir de nourriture 140 en position dans le compartiment 118. Comme en peut le voir sur le dessin, les glissières 154, 143 ne sont pas situées à la limite entre les compartiments 118 et 119 et comprennent un système de nervures 143 et gorges 154 complémentaires réalisées sur le réservoir 140 et le compartiment récepteur 118. Naturellement, un système de glissière similaire pourrait également être utilisé pour retenir le réservoir de boisson 130 dans le compartiment 117.

Chacun des compartiments 117, 118 et 119 présente, avantageusement, en coupe selon un plan perpendiculaire à la plus petite dimension 1 du fond du bac, une forme trapézoïdale, les nervures de séparation 151, 152 étant inclinées en direction du plan médian perpendiculaire à la plus grande dimension L du fond du bac 110, formant ainsi un angle obtus avec le fond des compartiments latéraux 117 et 118 (fig. 8). Cette configuration facilite, pour les animaux, l'accès à la nourriture et à la boisson disposées dans les réservoirs 130, 140.

Les réservoirs 130, 140 de boisson et de nourriture présentent une forme qui correspond à celle des compartiments 117 et 118 du bac 110. Les réservoirs 130, 140, qui présentent une section trapézoïdale avec la petite base située en bas, peuvent facilement être introduits par le haut dans les compartiments latéraux 117, 118 et sont retenus en place par les nervures 151, 152 mentionnés plus haut, qui sont arrondies, afin de réduire les risques de détérioration par les rongeurs. Un petit espace libre peut, éventuellement, demeurer dans les compartiments 117, 118 sous le réservoir 130 ou 140, dans la mesure où les animaux n'ont accès à la nourriture ou à la boisson qu'à une certaine hauteur au-dessus du fond 111 du bac 110.

Comme on peut le voir sur la fig. 2 ou les fig. 4A, 4B et 8, le réservoir de boisson 130 comprend une enveloppe en matière plastique 131 et un bouchon en caoutchouc 137 disposé dans l'enveloppe, à la partie inférieure de la face avant du réservoir 130 située du côté du compartiment central 119 du bac 110. Un embout 132, formant tétine, percé d'un canal capillaire 136, est introduit dans le bouchon 137 lors de la mise en place du réservoir 130 dans le bac 110. L'embout 132 peut ainsi être constitué d'une partie avant arrondie 135 qui facilite la succion, tout en empêchant une goutte de se former sans aspiration et d'une partie arrière 133 pointue qui permet le perçage du bouchon 137 lors de la mise en place de l'embout 132. Il est naturellement possible d'utiliser d'autres types de tétines pouvant être introduites dans l'enveloppe du réservoir 130. La forme particulière du réservoir de boisson 130, qui épouse la forme du compartiment 117, évite une perte de place et la présence d'un élément émergeant au-dessus du niveau du rebord supérieur 116 du bac 110. Un réservoir de boisson incorporé, tel que le réservoir 130, supprime ainsi l'utilisation des biberons cylindriques traditionnels encombrants qui compliquent la réalisation de la cage.

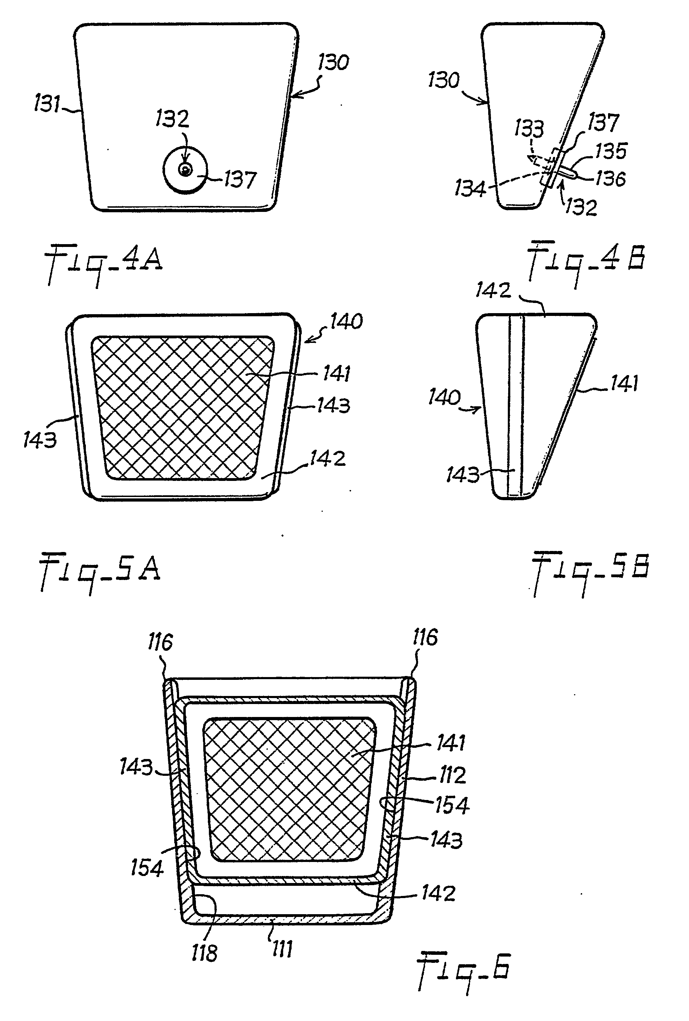

Le réservoir de nourriture 140, représenté sur les fig. 3 et 5A, 5B, peut présenter une constitution similaire à celle du réservoir de boisson 130 et comprend une enveloppe 142 en matière plastique qui épouse la forme du compartiment 118. La face avant la plus inclinée du réservoir 140, qui est prévue pour être située du côté du compartiment central 119, comprend une grille en matière plastique 141 formant mangeoire qui est intégrée à l'enveloppe 142 et peut être rapportée sur celle-ci, par exemple par thermosoudage, après remplissage de l'enveloppe 142.

On notera que, d'une manière générale, la cage 100 selon l'invention comprend, au sein du bac 110, dès le départ, tous les éléments nécessaires à la vie des animaux pendant un temps prédéterminé, correspondant au temps d'observation de ces animaux, y compris les rations de nourriture et de boisson, sans qu'intervienne aucun élément réutilisé et donc susceptible de provoquer une contamination. Par ailleurs, la répartition, effectuée au sein du bac, conduit à une compacité et permet, notamment, d'utiliser un couvercle 120 qui est essentiellement plat.

Le couvercle 120 est un autre élément important de la présente invention, dans la mesure où il permet d'assurer, de façon simple, une aération et un filtrage efficaces. Le couvercle 120 est rapporté sur le bac 110, de façon étanche, grâce à une fermeture à encastrement. Le couvercle 120 comprend ainsi un cadre 121 en matière plastique présentant, à sa partie extérieure, une partie conformée 126 définissant une gorge dans laquelle peut venir s'engager le rebord supérieur 116 du bac 110. La partie 126, prolongée à l'extérieur du cadre par une languette 127, présente une élasticité de la fermeture lorsque le couvercle est emboîté par les gorges 126 sur le rebord 116 du bac 110 (fig. 7). D'autres types de fermeture étanche en matière plastique incinérable pourraient cependant être également utilisés.

Le couvercle 120 comprend, dans sa partie centrale, une partie filtrante 122 qui s'étend sur une zone recouvrant au moins l'essentiel du compartiment central 119. La partie filtrante 122 est composée d'une structure en sandwich avec au moins une couche de papier filtre 125, enserrée entre deux grilles de renforcement et de support 123, 124, qui sont réalisées en matière plastique et présentent un maillage très fin. Ces grilles peuvent être, par exemple, du type moustiquaire et sont rattachées au cadre 121, par exemple par thermosoudage, une bande 128 de matière plastique pouvant être superposée à la partie périphérique de la structure filtrante 122 et au cadre 121 en matière plastique prolongé sous cette structure 122 sur une faible distance (voir fig. 7 et 9). La structure du couvercle 120 peut ainsi être réalisée sans difficulté.

Le bac 110 et le cadre 121 du couvercle 120 peuvent être réalisés entièrement ou partiellement en matière plastique translucide ou transparente, afin de permettre une surveillance des animaux. Les bacs 110, en forme de tronc de pyramide, peuvent, par ailleurs, être facilement engagés les uns dans les autres lors du stockage en attente d'être équipés de réservoirs de nourriture et de boisson si les nervures 151, 152 ne débordent pas trop à l'intérieur du bac.

Sur la fig. 1, la référence 160 désigne un ensemble de renforts et rainures formés dans la partie extérieure d'une paroi 112 du bac 110 pour constituer un porte-étiquette permettant l'identification de la cage 100.

## Revendications

1. Cage pour le logement de petits animaux en ambiance protégée, comprenant un bac (110) en matière plastique rigide et un couvercle (120) s'encastrant, de façon étanche, de façon amovible sur un élément de la cage, ledit bac (110) comprenant un compartiment central (119) pour le logement des animaux et ledit couvercle (120) comprenant un cadre (121) en matière plastique et une partie centrale (122) comportant un moyen de filtrage vis-à-vis de l'ambiance externe, ledit moyen étant rattaché au cadre (121) sur tout un pourtour et s'étendant au moins sur une partie substantielle du compartiment central (119) du bac (110), ladite cage étant caractérisée en ce que:

– la matière plastique utilisée pour la réalisation du bac (110) et du couvercle (120) est une matière plastique incinérable, de manière que le bac (110) et le couvercle (120) puissent être détruits par incinération après un usage unique,

– le couvercle (120) s'encastre à force directement sur le rebord supérieur (116) du bac (110),

– des compartiments latéraux (117, 118) sont situés de part et d'autre du compartiment central (119), ces compartiments étant destinés à la réception d'un réservoir de boisson (130) et d'un réservoir de nourriture (140), respectivement.

2. Cage selon la revendication 1, caractérisé en ce que la partie centrale (122) filtrante du couvercle (120) comprend un filtre en papier (125) pris en sandwich entre deux fines grilles support (123, 124) thermosoudées sur le cadre en matière plastique (121) du couvercle (120).

3. Cage selon la revendication 2, caractérisée en ce que les deux fines grilles support (123, 124) sont en matière plastique.

4. Cage selon l'une quelconque des revendications 1 à 3, caractérisée en ce que le rebord du couvercle (120) définit une gorge (126) élastique venant s'emboîter à force sur le rebord rigide (116) du bac (110).

5. Cage selon l'une quelconque des revendications 1 à 4, caractérisée en ce que le réservoir de nourriture (140) comprend une enveloppe en matière plastique (142) épousant sensiblement la forme du compartiment de nourriture (118) et présentant une grille (141) en matière plastique formant mangeoire, intégrée par thermosoudage dans l'enveloppe (142) dans la face du réservoir (140) située en regard du compartiment central (119).

6. Cage selon l'une quelconque des revendications 1 à 5, caractérisée en ce que le réservoir de boisson (130) comprend une enveloppe en matière plastique (131) épousant sensiblement la forme du compartiment de boisson (117) et présentant une tétine (132) disposée dans l'enveloppe (131) dans la face située en regard du compartiment central (119).

7. Cage selon l'une quelconque des revendications 1 à 6, caractérisée en ce que le fond (111) du bac (110) comporte des nervures transversales (113, 114) situées au niveau des séparations entre le compartiment central (119) et les compartiments latéraux (117, 118).

8. Cage selon l'une quelconque des revendications 1 à 7, caractérisée en ce que le bac (110) comprend des nervures (151, 152) formées en relief sur les parois du bac entre le fond (111) et le rebord supérieur (116) du bac au niveau des séparations entre le compartiment central (119) et les compartiments latéraux (117, 118) pour retenir les réservoirs de boisson (130) et de nourriture (140).

9. Cage selon l'une quelconque des revendications 1 à 8, caractérisée en ce que le bac (110) présente la forme d'un tronc de pyramide inversé et les séparations (151, 152) entre le compartiment central (119) et les compartiments latéraux (117, 118) sont inclinées vers le centre du bac, formant un angle obtus avec le fond des compartiments latéraux (117, 118).

10. Cage selon l'une quelconque des revendications 1 à 9, caractérisée en ce que le couvercle (120) est essentiellement plat et situé dans le plan du rebord supérieur (116) du bac (110).

11. Cage selon l'une quelconque des revendications 1 à 10, caractérisée en ce que les compartiments latéraux (117, 118) sont symétriques par rapport à un plan vertical médian du bac (110).

## Claims

1. Cage for keeping small animals in a controlled environment, comprising a box (110) in rigid plastic material and a lid (120) fitting tightly and removably on an element of the cage, said box (110) comprising a central compartment (119) for keeping the animals and said lid (120) comprising a frame (121) in plastic material and a central part (122) equipped with means for filtering the outside atmosphere, said means being joined to the frame (121) over a whole periphery and extending at least over a substantial part of the central compartment (119) of the box (110), said cage being characterized in that:

– the plastic material used for producing the box (110) and the lid (120) is an incineratable plastic, so that the box (110) and the lid (120) can be destroyed by incineration after one use,

– the lid (120) is directly force-fittable over the upper rim (116) of the box (110),

– lateral compartments (117, 118) are situated on either side of the central compartment (119), said compartments being designed to receive, respectively, a container of drink (130) and a container of food (140).

2. Cage according to claim 1, characterized in that the filtering central part (122) of the lid (120) comprises a paper filter (125) sandwiched between two fine supporting grids (123, 124) thermowelded on the frame of plastic material (121) of the lid (120).

3. Cage according to claim 2, characterized in that both fine supporting grids (123, 124) are in plastic material.

4. Cage according to any one of claims 1 to 3, characterized in that the border of the lid (120) defines a resilient groove (126) which can be force-fitted on the rigid rim (116) of the box (110).

5. Cage according to any one of claims 1 to 4, characterized in that the food container (140) comprises an envelope in plastic material (142) which substantially adopts the shape of the food compartment (118) and is equipped with a grid (141) forming a feeding trough, integrated by thermowelding in the envelope (142) in the face of the container (140) situated in facing relationship to the central compartment (119).

6. Cage according to any one of claims 1 to 5, characterized in that the drink container (130) comprises an envelope in plastic material (131) which substantially adopts the shape of the drink container (117) and is equipped with a teat (132) placed in the envelope (131) in the face situated in facing relationship to the central compartment (119).

7. Cage according to any one of claims 1 to 6, characterized in that the bottom (111) of the box (110) comprises transversal ribs (113, 114) situated at the level of the dividing walls between the central compartment (119) and the lateral compartments (117, 118).

8. Cage according to any one of claims 1 to 7, characterized in that the box (110) comprises ribs (151, 152) formed so as to project on the walls of the box between the bottom (111) and the upper rim (116) of the box at the level of the dividing walls between the central compartment (119) and the lateral compartments (117, 118), for holding the drink (130) and food (140) containers.

9. Cage according to any one of claims 1 to 8, characterized in that the box (110) has the shape of an upturned truncated pyramid and the dividing walls (151, 152) between the central compartment (119) and the lateral compartments (117, 118) are inclined in the direction of the center of the box, forming an obtuse angle with the bottom of the lateral compartments (117, 118).

10. Cage according to any one of claims 1 to 9, characterized in that the lid (120) is essentially flat and situated in the plane of the upper rim (116) of the box (110).

11. Cage according to any one of claims 1 to 10, characterized in that the lateral compartments (117, 118) are symmetrical with respect to a vertical median plane of the box (110).

## Patentansprüche

1. Käfig für die Unterbringung von kleinen Tieren in geschützter Umgebung, mit einem Behälter (110) aus steifem Kunststoffmaterial und einem Deckel (120), der sich auf dichtende und entfernbare Weise auf ein Element des Käfigs fügt, wobei der Behälter (110) ein zentrales Abteil (119) für die Unterbringung der Tiere und der Deckel (120) einen Rahmen (121) aus Kunststoffmaterial und einen Mittelbereich (122) aufweist, der eine Filtereinrichtung bezüglich der äußeren Umgebung aufweist, wobei die Einrichtung an dem Rahmen (121) auf einem gesamten Umfang befestigt ist und sich wenigstens über einen wesentlichen Bereich des zentralen Abteils (119) des Behälters (110) erstreckt, wobei der Käfig dadurch gekennzeichnet ist, daß
   – das für die Herstellung des Behälters (110) und des Deckels (120) verwendete Material ein verbrennbares Kunststoffmaterial derart ist, daß der Behälter (110) und der Deckel (120) durch Verbrennung zu Asche nach einer einzigen Verwendung zerstört werden können,
   – sich der Deckel (120) unter Kraft direkt auf den oberen Rand (116) des Behälters (110) des Behälters (110) fügt,
   – seitliche Abteile (117, 118) beiderseits des Mittelabteils (119) angeordnet sind, wobei diese Abteile für die Aufnahme eines Getränkereservoirs (130) bzw. eines Nahrungsreservoirs (140) bestimmt sind.

2. Käfig nach Anspruch 1, dadurch gekennzeichnet, daß der filternde Mittelbereich (122) des Deckels (120) einen Filter aus Papier (125) aufweist, der in Sandwichart zwischen zwei feinen Tragsieben (123, 124) eingebracht ist, die auf den Rahmen aus Kunststoffmaterial (121) des Deckels (120) thermogeschweißt sind.

3. Käfig nach Anspruch 2, dadurch gekennzeichnet, daß die beiden feinen Tragsiebe (123, 124) aus Kunststoffmaterial sind.

4. Käfig nach einem der Ansprüche 1 bis 3, dadurch gekennzeichnet, daß der Rand des Deckels (120) eine elastische Kerbe (126) definiert, die unter Kraft auf dem steifen Rand (116) des Behälters (110) in Überstülpung kommt.

5. Käfig nach einem der Ansprüche 1 bis 4, dadurch gekennzeichnet, daß das Nahrungsreservoir (140) eine Hülle aus Kunststoffmaterial (142) aufweist, die im wesentlichen der Form des Nahrungsabteils (118) folgt und ein Sieb (141) aus Kunststoffmaterial aufweist, welches Futterstelle bildet, das durch Thermoschweißung in die Hülle (142) in der Seite des Reservoirs (140) integriert ist, die gegenüber dem Mittenabteil (119) angeordnet ist.

6. Käfig nach einem der Ansprüche 1 bis 5, dadurch gekennzeichnet, daß das Getränkereservoir (130) eine Hülle aus Kunststoffmaterial (131) aufweist, die im wesentlichen der Form des Getränkeabteils (117) folgt und eine Kuppe (132) aufweist, die in der Hülle (131) angeordnet ist, in der dem Mittenabteil (119) gegenüberliegenden Seite.

7. Käfig nach einem der Ansprüche 1 bis 6, dadurch gekennzeichnet, daß der Boden (111) des Behälters (110) Querkerben (113, 114) aufweist, die auf der Höhe der Trennungen zwischen dem Mittenabteil (119) und den seitlichen Abteilen (117, 118) angeordnet sind.

8. Käfig nach einem der Ansprüche 1 bis 7, dadurch gekennzeichnet, daß der Behälter (110) Kerben (101, 102) aufweist, die reliefmäßig auf den Seitenwänden des Behälters zwischen dem Boden (111) und dem oberen Rand (116) des Behälters auf der Höhe der Trennungen zwischen dem Mittenabteil (119) und den Seitenabteilen (117, 118) ausgebildet sind, um das Getränkereservoir (130) und das Nahrungsreservoir (140) zu halten.

9. Käfig nach einem der Ansprüche 1 bis 8, dadurch gekennzeichnet, daß der Behälter (110) die Form eines umgedrehten Pyramidenstumpfes aufweist und die Trennungen (151, 152) zwischen dem Mittenabteil (119) und den seitlichen Abteilen (117, 118) zum Zentrum des Behälters hin geneigt sind, wobei sie einen stumpfen Winkel mit dem Boden der seitlichen Abteile (117, 118) bilden.

10. Käfig nach einem der Ansprüche 1 bis 9, dadurch gekennzeichnet, daß der Deckel (120) im wesentlichen oben ist und in der Ebene des oberen Randes (116) des Behälters (110) angeordnet ist.

11. Käfig nach einem der Ansprüche 1 bis 10, dadurch gekennzeichnet, daß die seitlichen Abteile (117, 118) bezüglich einer vertikalen Mittenebene des Behälters (110) symmetrisch sind.

Fig-1

Fig-2

Fig-3

Fig-4A

Fig-4B

Fig-5A

Fig-5B

Fig-6

126  128  125  123  128  121  126

127  121  122  124  120  127

*Fig-7*

116  130  140  154  116

151

110

132

152

112  141  112

119  153

118

117  113  111  114  154

*Fig-8*

128

120

VII  VII

126

127

121  123

*Fig-9*